# EUROPÄISCHE PATENTSCHRIFT

(11) **EP 2 020 551 B1**
(45) Veröffentlichungstag und Bekanntmachung des Hinweises auf die Patenterteilung: **02.01.2013**
(21) Anmeldenummer: 08157296.8
(22) Anmeldetag: 30.05.2008
(51) Int. Cl.: F16K 24/00

(54) **Gehäuse für ein Be- und Entlüftungsventil für Rohrleitungen bzw. Armaturen**
Casing for a ventilation and exhaust element for pipes and fittings
Boîtier pour une soupape d'alimentation et d'évacuation d'air pour conduites ou armatures

(30) Priorität: 24.07.2007 DE 102007034312
(43) Veröffentlichungstag der Anmeldung: 04.02.2009
(73) Patentinhaber: Hawle Armaturen GmbH, 83395 Freilassing (DE)
(72) Erfinder: Graßl, Helmut, 83278 Traunstein (DE)
(74) Vertreter: Schwabe - Sandmair - Marx

(56) Entgegenhaltungen:
- DE-A1-102005 056 068
- US-A- 5 853 071

## Beschreibung

Die Erfindung betrifft ein Gehäuse für ein Be- und Entlüftungsventil für Rohrleitungen bzw. Armaturen.

Solche Be- und Entlüftungsventile werden verwendet, um mediumführende Leitungen, insbesondere unter Druck stehende Leitungen und speziell Trinkwasser - oder Abwasserleitungen zu belüften und/oder zu entlüften. Sie können an geodätischen Hochpunkten an den Leitungen selbst oder an Armaturen im Leitungssystem angeordnet werden. Ein herkömmliches Be- und Entlüftungsventil wird beispielsweise in der DE 10 2005 056 068 A1 beschrieben.

Die Gehäuse solcher Be- und Entlüftungsventile sind üblicherweise Sphäroguss-Gehäuse, und sie weisen deshalb ein sehr hohes Gewicht auf, was ihren Transport sowie ihre Handhabung erschwert. Sie müssen ferner aufwendig gegen Korrosion geschützt werden. Es gibt Be- und Entlüftungsventile mit Kunststoffgehäusen, die aber nachteiligerweise nur in niedrigen Druckbereichen eingesetzt werden können; außerdem treten Probleme durch die Alterungseffekte solcher Kunststoffmaterialien auf.

Es ist die Aufgabe der vorliegenden Erfindung, ein Gehäuse für ein Be- und Entlüftungsventil für Rohrleitungen bzw. Armaturen bereitzustellen, welches die oben genannten Nachteile wenigstens teilweise überwindet. Insbesondere soll ein leichtes und/oder langlebiges Gehäuse geschaffen werden, das speziell auch den Betrieb bei höheren Drücken ermöglicht.

Diese Aufgabe wird erfindungsgemäß durch ein Gehäuse gemäß dem Anspruch 1 gelöst. Die Unteransprüche definieren bevorzugte Ausführungsformen der Erfindung.

Ein erfindungsgemäßes Gehäuse für ein Be- und Entlüftungsventil für Rohrleitung bzw. Armaturen hat einen Hohlkörper, einen Verbindungsabschnitt und einen Be - und Entlüftungsabschnitt, und mindestens der Hohlkörper des Gehäuses besteht im Wesentlichen aus Aluminium. Ferner sind der Verbindungsabschnitt und der Be- und Entlüftungsabschnitt als Endabschnitte ausgebildet, die flanschartig an zwei Stirnseiten des Hohlkörpers befestigbar sind und der Hohlkörper ist ein Aluminium-Strangpressprofil. Der Verbindungsabschnitt und/oder der Be- und Entlüftungsabschnitt können als Aluminium-Druckgussteile ausgebildet werden, insbesondere als Aluminium-Druckgussdeckel. Mit anderen Worten wird gemäß der vorliegenden Erfindung zumindest der größte und gewichtigste Teil des Gehäuses aus Aluminium ausgebildet, einem Werkstoff, der sowohl hohen Drücken standhalten kann als auch ein relativ geringes Gewicht aufweist. Dadurch wird das Be- und Entlüftungsventil insgesamt leicht, bleibt aber druckfest. Ein weiterer Vorteil der erfindungsgemäßen Werkstoffwahl besteht darin, dass die Probleme mit einer Materialalterung bzw. einer zusätzlich notwendigen Korrosionsschutzschicht nicht mehr auftreten, weil der Aluminiumwerkstoff selbst korrosionsbeständig und alterungsstabil ist.

Ganz allgemein ist anzumerken, dass, wenn hierin die Begriffe "Verbindungsabschnitt" und "Be- und Entlüftungsabschnitt" genannt werden, Gehäuseteile gemeint sind, welche den jeweiligen entsprechenden Funktionselementen eines solchen Ventils zugeordnet sind bzw. sie im Wesentlichen umschließen oder zusammen mit dem Gehäuse abschließen. Meist sind die Elemente des Ventils, welche die Verbindung zum Rohrsystem oder zu einer Armatur herstellen im Gehäuse getrennt von denjenigen Elementen vorgesehen, welche die Be- und Entlüftungsfunktion erfüllen. Die genannten Gehäuseteile können aber grundsätzlich auch als ein einziger integraler Körper bereitgestellt werden. Es ist ferner möglich, dass der Verbindungsabschnitt und der Be- und Entlüftungsabschnitt einem einzigen Abschnitt angehören, also zusammengefasst sind, solange der Hauptkörper, also der Hohlkörper des Gehäuses im Wesentlichen aus Aluminium besteht.

Obwohl prinzipiell all diese Möglichkeiten bestehen, ist das erfindungsgemäße Gehäuse bei einer Ausführungsform mehrteilig aufgebaut, und der Verbindungsabschnitt und/oder der Be- und Entlüftungsabschnitt ist als separates

Gehäuseteil vorgesehen, das mit dem Hohlkörper verbindbar ist.

Gemäß einer Ausführungsvariante ist der Hohlkörper im Wesentlichen zylinderförmig ausgebildet. Der Verbindungsabschnitt und/oder der Be- und Entlüftungsabschnitt kann als Deckel, insbesondere als Runddeckel für die Hohlkörper-Stirnseiten ausgebildet werden.

Es besteht erfindungsgemäß die Möglichkeit, am Hohlkörper Verstärkungsrippen auszubilden, insbesondere längsverlaufende Verstärkungsrippen, und in einem solchen Fall ist es wiederum möglich, diese Verstärkungsrippen zur Verbindung der Gehäuseelemente zu nutzen. Dies geschieht beispielsweise dadurch, dass an den Stirnenden der Verstärkungsrippen im Bereich der Hohlkörper-Stirnenden Verbindungselemente für die Verbindung des Hohlkörpers mit dem Verbindungsabschnitt und/oder Be- und Entlüftungsabschnitt vorgesehen werden. Auf der anderen Seite kann der Verbindungsabschnitt und/oder Be- und Entlüftungsabschnitt an seinem jeweiligen Randbereich Verbindungselemente aufweisen, die komplementär zu den Verbindungselementen der Hohlkörper-Verstärkungsrippen angebracht bzw. ausgebildet sind. Die Verbindungselemente des Hohlkörpers und die Verbindungselemente der beiden genannten Abschnitte werden dann zum Zusammenbau des Gehäuses genutzt.

Die Erfindung betrifft ferner eine Be- und Entlüftungsventil mit einem Gehäuse wie es oben in verschiedenen Ausführungsformen beschrieben worden ist.

Die Erfindung wird im Weiteren anhand eines Ausführungsbeispiels näher erläutert. Sie kann alle hierin beschriebenen Merkmale einzeln sowie in jedweder sinnvollen Kombination umfassen. In den beiliegenden Zeichnungen zeigen:
- Figur 1: ein erfindungsgemäßes Gehäuse in einer Schräg-Explosions-Ansicht; und
- Figur 2: das Gehäuse aus Figur 1 im zusammengebauten Zustand.

In den Figuren ist eine Ausführungsform eines erfindungsgemäßen Gehäuses für ein Be- und Entlüftungsventil insgesamt mit dem Bezugszeichen 1 gekennzeichnet. Es weist einen zylindrischen Hohlkörper 3 und zwei Runddeckel auf, einen oberen Runddeckel 2 und einen unteren Runddeckel 4. Der Runddeckel 2 kann als "Be- und Entlüftungsabschnitt" des Gehäuses bezeichnet werden, weil dieses Gehäuse in seinem oberen Bereich die Be- und Entlüftungselemente des Ventils umgeben wird. Durch den Durchgang 8 wird somit die Be- und Entlüftungsströmung in das bzw. aus dem Gehäuse 1 erfolgen.

Der untere Gehäusedeckel 4 kann als "Verbindungsabschnitt" bezeichnet werden, weil das Gehäuse und damit das Be- und Entlüftungsventil an dieser Stelle auf ein Rohr eines Leitungssystems oder auf eine Armatur aufgesetzt werden kann, um mit dem genannten Element verbunden zu werden. Hierfür eignet sich eine Flanschverbindung die aber in den Zeichnungen nicht dargestellt ist.

Man könnte den oberen Deckel 2 als auch Be- und Entlüftungsdeckel und den unteren Deckel 4 auch als "Verbindungs- bzw. Anschlussdeckel" bezeichnen.

Der Hohlkörper 3 ist ein Aluminium-Strangpressprofil, und bei der vorliegenden Ausführungsform bestehen auch die Deckel 2 und 4 aus Aluminium, nämlich aus Aluminiumdruckguss. Durch diese Materialwahl kann bei einer hohen Stabilität des Gehäuses ein hoher Betriebsdruck realisiert werden, ohne dass das Ventil oder das Gehäuse zu schwer werden müssen. Probleme mit der Alterung oder der Korrosion des Materials treten nicht auf, insbesondere kann eine Korrosionsschutzschicht eingebaut werden. Insbesondere die Korrosionsbeständigkeit ist bei solchen, meist im Tiefbau verlegten Ventilen wichtig.

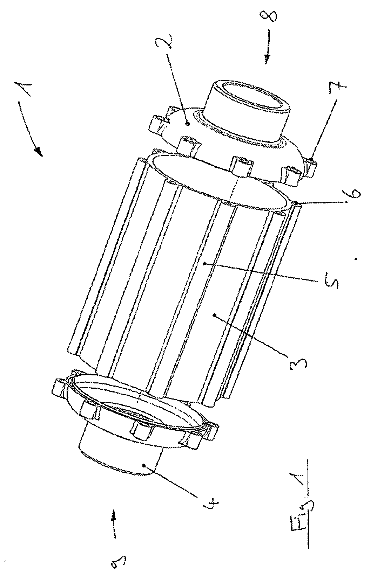

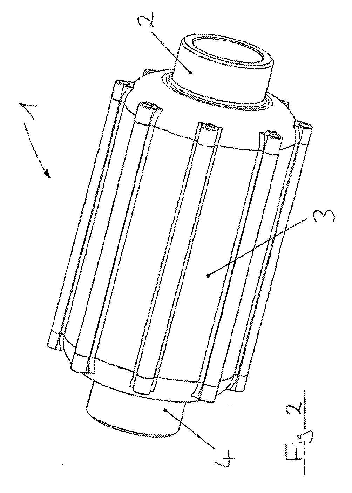

In den Figuren ist zu sehen, dass der Hohlkörper 3 außen längs verlaufende Rippen 5 aufweist. Diese Rippen haben zwei Vorteile, einerseits stabilisieren sie den Hohlkörper und gestatten eine dünne Wandstärke in den restlichen Hohlkörper-Bereichen, andererseits geben sie den Hohlkörper an bestimmten Stellen eine ausreichende Materialdicke, um die Befestigung der Deckel in sicherer Weise zu verwirklichen. Die Rippen 5 weisen an ihren Stirnseiten Verbindungselemente auf, beispielsweise Bohrungen mit Innengewinde. Komplementär zu den Bohrungen, die das Bezugszeichen 6 in Figur 1 tragen, also an entsprechenden Umfangsstellen, sind an den Deckeln 2, 4 wiederum Verbindungselemente angebracht, nämlich Augenfortsätze 7. Die Augenfortsätze 7 weisen beim gezeigten Ausführungsbeispiel wiederum Bohrungen, nämlich Durchgangsbohrungen auf und über diese Bohrungen kann mit Hilfe von Bolzen der jeweilige Deckel 2 bzw. 4 an dem Hohlkörper 3 befestigt werden, so dass ein zusammengebautes Ventilgehäuse entsteht, wie es in Figur 2 dargestellt ist.

## Patentansprüche

1. Gehäuse (1) für ein Be- und Entlüftungsventil für Rohrleitungen bzw. Armaturen im Tiefbau wobei das Gehäuse einen Hohlkörper (3), einen Verbindungsabschnitt (4) und einen Be- und Entlüftungsabschnitt (2) aufweist, **dadurch gekennzeichnet, dass** mindestens der Hohlkörper (3) im Wesentlichen aus Aluminium besteht, dass der Verbindungsabschnitt (4) und der Be- und Entlüftungsabschnitt (2) als Endabschnitte 2 ausgebildet sind, die flanschartig an zwei Stirnseiten des Hohlkörpers (3) befestigbar sind, und dass der Hohlkörper (3) ein Aluminium-Strangpressprofil ist.

2. Gehäuse nach Anspruch 1, **dadurch gekennzeichnet, dass** es mehrteilig aufgebaut ist und der Verbindungsabschnitt (4) und/oder der Be- und Entlüftungsabschnitt (2) als separates Gehäuseteil vorgesehen ist, das mit dem Hohlkörper (3) verbindbar ist.

3. Gehäuse nach einem der Ansprüche 1 bis 2, **dadurch gekennzeichnet, dass** der Hohlkörper (3) im Wesentlichen zylinderförmig ausgebildet ist.

4. Gehäuse nach einem der Ansprüche 1 bis 3, **dadurch gekennzeichnet, dass** der Verbindungsabschnitt (4) und/oder der Be- und Entlüftungsabschnitt als Deckel, insbesondere Runddeckel für die Hohlkörper-Stirnseiten ausgebildet ist.

5. Gehäuse nach einem der Ansprüche 1 bis 4, **dadurch gekennzeichnet, dass** am Hohlkörper (3) Verstärkungsrippen (5) ausgebildet sind, insbesondere längs verlaufende Verstärkungsrippen.

6. Gehäuse nach Anspruch 5, **dadurch gekennzeichnet, dass** es an den Stirnenden der Verstärkungsrippen (5) im Bereich der Hohlkörper-Stirnenden Verbindungselemente (6) für die Verbindung des Hohlkörpers (3) mit dem Verbindungsabschnitt (4) und/oder dem Be- und Entlüftungsabschnitt (2) aufweist.

7. Gehäuse nach Anspruch 6, **dadurch gekennzeichnet, dass** der Verbindungsabschnitt (4) und/oder der Be- und Entlüftungsabschnitt (2) an ihrem Randbereich Verbindungselemente (7) aufweisen, die komplementär zu den Verbindungselementen (6) der Hohlkörper-Verstärkungsrippen (5) angebracht bzw. ausgebildet sind.

8. Gehäuse nach einem der Ansprüche 1 bis 7, **dadurch gekennzeichnet, dass** der Verbindungsabschnitt (4) und/oder der Be- und Entlüftungsabschnitt (2) als Aluminium-Druckgussteil ausgebildet ist, insbesondere als Aluminium-Druckgussdeckel.

9. Be- und Entlüftungsventil mit einem Gehäuse (1) nach einem der Ansprüche 1 bis 8.

## Claims

1. A casing (1) for a ventilating and evacuating valve for pipe lines and/or fittings in underground engineering, wherein the casing comprises a hollow body (3), a connecting section (4) and a ventilating and evacuating section (2), **characterised in that**: at least the hollow body (3) consists substantially of aluminium; the connecting section (4) and the ventilating and evacuating section (2) are formed as end sections which can be attached in the manner of a flange to two end faces of the hollow body (3); and the hollow body (3) is an aluminium extruded profile.

2. The casing according to claim 1, **characterised in that** it is designed in a number of parts, and the connecting section (4) and/or the ventilating and evacuating section (2) is provided as a separate casing part which can be connected to the hollow body (3).

3. The casing according to any one of claims 1 to 2, **characterised in that** the hollow body (3) is formed to be substantially cylindrical.

4. The casing according to any one of claims 1 to 3, **characterised in that** the connecting section (4) and/or the ventilating and evacuating section is formed as a cover, in particular a round cover, for the end faces of the hollow body.

5. The casing according to any one of claims 1 to 4, **characterised in that** reinforcing ribs (5), in particular longitudinal reinforcing ribs, are formed on the hollow body (3).

6. The casing according to claim 5, **characterised in that** it comprises connecting elements (6), for connecting the hollow body (3) to the connecting section (4) and/or the ventilating and evacuating section (2), on the end faces of the reinforcing ribs (5) in the region of the end faces of the hollow body.

7. The casing according to claim 6, **characterised in that** the connecting section (4) and/or the ventilating and evacuating section (2) comprise connecting elements (7) on their peripheral region, which are attached or formed complementarily to the connecting elements (6) of the reinforcing ribs (5) of the hollow body.

8. The casing according to any one of claims 1 to 7, **characterised in that** the connecting section (4) and/or the ventilating and evacuating section (2) are formed as aluminium die-cast parts, in particular as aluminium die-cast covers.

9. A ventilating and evacuating valve comprising a casing (1) according to any one of claims 1 to 8.

## Revendications

1. Boîtier (1) pour une soupape d'alimentation et d'évacuation d'air pour des conduites ou des robinetteries en génie civil, le boîtier présentant un corps creux (3), une section de liaison (4) et une section d'alimentation et d'évacuation d'air (2), **caractérisé en ce qu'**au moins le corps creux (3) est essentiellement en aluminium, **en ce que** la section de liaison (4) et la section d'alimentation et d'évacuation d'air (2) sont formées comme sections d'extrémité, qui peuvent être fixées comme des brides à deux faces frontales du corps creux (3), et **en ce que** le corps creux (3) est un profilé extrudé en aluminium.

2. Boîtier suivant la revendication 1, **caractérisé en ce qu'**il est construit en plusieurs parties et **en ce que** la section de liaison (4) et/ou la section d'alimentation et d'évacuation d'air (2) sont prévues comme parties de boîtier séparées, qui peuvent être reliées au corps creux (3).

3. Boîtier suivant l'une des revendications 1 à 2, **caractérisé en ce que** le corps creux (3) est essentiellement de forme cylindrique.

4. Boîtier suivant l'une des revendications 1 à 3, **caractérisé en ce que** la section de liaison (4) et/ou la section d'alimentation et d'évacuation d'air sont formées comme couvercles, en particulier comme couvercles ronds pour les faces frontales du corps creux.

5. Boîtier suivant l'une des revendications 1 à 4, **caractérisé en ce que** des nervures de renfort (5), en particulier des nervures de renfort s'étendant longitudinalement, sont formées sur le corps creux (3).

6. Boîtier suivant la revendication 5, **caractérisé en ce qu'**il présente aux extrémités frontales des nervures de renfort (5), dans la zone des extrémités frontales du corps creux des éléments de liaison (6) pour la liaison du corps creux (3) à la section de liaison (4) et/ou à la section d'alimentation et d'évacuation d'air (2).

7. Boîtier suivant la revendication 6, **caractérisé en ce que** la section de liaison (4) et/ou la section d'alimentation et d'évacuation d'air (2) présentent à leur zone de bordure des éléments de liaison (7) qui sont montés ou formés de manière complémentaire aux éléments de liaison (6) des nervures de renfort du corps creux (5).

8. Boîtier suivant l'une des revendications 1 à 7, **caractérisé en ce que** la section de liaison (4) et/ou la section d'alimentation et d'évacuation d'air (2) sont formées comme pièces en aluminium moulées sous pression, en particulier comme couvercles en aluminium moulés sous pression.

9. Soupape d'alimentation et d'évacuation avec un boîtier (1) suivant l'une des revendications 1 à 8.
